# EUROPÄISCHE PATENTANMELDUNG

(11) **EP 1 347 196 A1**
(43) Veröffentlichungstag der Anmeldung: **24.09.2003**
(21) Anmeldenummer: 02006160.2
(22) Anmeldetag: 19.03.2002
(51) Int. Cl.: F16F 1/10

(54) **Spiralfeder mit mehreren in einer Ebene ineinander angeordneten Federwindungen**

(71) Anmelder: Schroer, Bernt, Dr., 33442 Herzebrock-Clarholz (DE)
(72) Erfinder: Schroer, Bernt, Dr., 33442 Herzebrock-Clarholz (DE)
(74) Vertreter: Patentanwälte Rehberg + Hüppe

(57) **Zusammenfassung**

Bei einer Spiralfeder (1) mit mehreren in einer Ebene ineinander angeordneten Federwindungen (3) nimmt der Abstand (13) zwischen den Federwindungen (3) über einen Bereich (8) der unbelasteten Spiralfeder (1) von innen nach außen zu.

## Beschreibung

Die Erfindung bezieht sich auf eine Spiralfeder mit mehreren in einer Ebene ineinander angeordneten Federwindungen.

Das Federstahlmaterial, aus dem eine solche Spiralfeder ausgebildet wird, ist häufig bandförmig. Aus diesem Grund werden entsprechende Spiralfedern auch als Bandspiralfedern bezeichnet. Die vorliegende Erfindung beschränkt sich aber nicht auf Spiralfedern, deren Federstahlmaterial einen bestimmten Querschnitt aufweist.

Spiralfedern der eingangs beschriebenen Art werden beispielsweise dazu eingesetzt, statische oder auch dynamische Drehmomente zwischen einem inneren und einem äußeren Anschlussbereich der Spiralfeder aufzunehmen oder aufzubringen. In der dabei üblichen Belastungsrichtung ziehen sich die Federwindungen der Spiralfeder zusammen.

Bei den bekannten Spiralfedern der eingangs beschriebenen Art weisen die Federwindungen in Folge ihrer Herstellung durch Wickeln auf einen Dorn, wobei entweder die Lagen des Federstahlmaterials direkt oder unter Zwischenordnung einer Zwischenlage konstanter Dicke aufeinander liegen, einen im wesentlichen konstanten Abstand zueinander auf. D.h., die Steigung der Federwindungen ist im wesentlichen konstant. Diese Angaben beziehen sich zumindest auf den wirksamen Bereich der bekannten Spiralfedern zwischen ihrem inneren und ihrem äußeren Anschlussbereich. Bei der Beanspruchung der bekannten Spiralfeder wird beobachtet, dass sich ihre äußeren Federwindungen schneller zusammenziehen als ihre inneren, so dass die äußeren Federwindungen aneinander zur Anlage kommen, bevor eine Anlage der inneren Federwindungen aneinander absehbar ist. Hierdurch wird der wirksame Einsatzbereich der bekannten Spiralfedern begrenzt, weil durch die Reibung der äußeren Federwindungen aneinander die Kraft-Weg-Kurve der Spiralfeder stark negativ beeinflusst wird. Dies gilt sowohl in statischen als auch in dynamischen Anwendungen. Hinzu kommt eine Geräuschentwicklung durch die aneinander reibenden Federwindungen, die sich auch bei statischen Torsionsbelastungen der Spiralfeder bemerkbar machen können, wenn diese beispielsweise zusätzlich zu der Drehmomentbelastung in tangentialer oder axialer Richtung zu Schwingungen angeregt wird. Bei dynamischen Belastungen der Spiralfeder sind die Auswirkungen der aneinander reibenden äußeren Federwindungen in aller Regel jedoch noch nachteiliger. Um die Reibung der äußeren Federwindungen aneinander zu vermeiden werden die bekannten Spiralfedern entweder so dimensioniert, dass auch bei ihrer maximalen Beanspruchung ein Kontakt der äußeren Federwindungen nicht erfolgen kann oder es wird durch aufwendige Oberflächenbehandlungen einerseits die Reibung zwischen den äußeren Federwindungen aneinander reduziert und andererseits die Oberfläche des Federstahlmaterials vor einem Verschleiß durch eben diese Reibung geschützt. Alle genannten Maßnahmen sind jedoch mit erheblichen zusätzlichen Kosten und einer ungünstigen Material- und Bauraumausnutzung verbunden.

Der Erfindung liegt daher die Aufgabe zugrunde, eine Spiralfeder der eingangs beschriebenen Art aufzuzeigen, die diese Nachteile vermeidet.

Erfindungsgemäß wird diese Aufgabe dadurch gelöst, dass bei einer Spiralfeder mit mehreren, in einer Ebene ineinander angeordneten Federwindungen der Abstand zwischen den Federwindungen zumindest über einen Bereich der unbelasteten Spiralfeder von innen nach außen zunimmt.

Durch die Zunahme des Abstands der Federwindungen bei der neuen Spiralfeder wird kompensiert, dass sich die äußeren Federwindungen bei der Belastung der Spiralfeder stärker zusammenziehen als die inneren Federwindungen. Damit wird dafür gesorgt, dass ein Kontakt der Federwindungen unter Belastung verzögert wird. Eine effektive Verzögerung dieses Kontakts tritt dann auf, wenn der Abstand der Federwindung über ein volle Federwindung hinweg um mehr als 20 %, vorzugsweise um mehr als 33 % und besonders bevorzugt um mindestens 50 % anwächst.

Es ist durchaus denkbar, den Abstand zwischen den Federwindungen schrittweise ansteigen zu lassen. Bevorzugt ist es aber, wenn der Abstand zwischen den Federwindungen stetig zunimmt. Dabei kann eine gleichbleibende Zuwachsrate eingestellt werden.

Die ideale neue Spiralfeder ist dadurch gekennzeichnet, dass sich bei Belastung der Spiralfeder die Federwindungen in dem gesamten Bereich, in dem der Abstand zwischen den Federwindungen der unbelasteten Spiralfeder zunimmt, gleichzeitig auf Berührung aneinander annähern. D.h., es tritt erst dann eine Berührung zwischen den einzelnen Federwindungen auf, wenn der Abstand zwischen den Federwindungen über den gesamten Bereich verbraucht ist und die Spiralfeder auch keine theoretische Drehmomentaufnahmekapazität mehr aufweist.

Für die Lage des Bereichs der unbelasteten Spiralfeder, in dem der Abstand zwischen den Federwindungen zunimmt, ist besonders wichtig, dass er an einem äußeren Anschlussbereich der Spiralfeder und nicht bereits vorher endet. Anderenfalls besteht die Gefahr, dass zwar innerhalb des Bereichs eine vorzeitige Berührung der Federwindungen aneinander vermieden wird, dass aber diese Berührung schon vorher irgendwo zwischen dem Bereich und dem äußeren Anschlussbereich der Spiralfeder auftritt.

Eine volle Ausnutzung der Erfindung setzt voraus, dass der Bereich der unbelasteten Spiralfeder, in dem der Abstand zwischen den Federwindungen zunimmt, an einem inneren Anschlussbereich der Spiralfeder beginnt, so dass letztlich die gesamte Spiralfeder den zunehmenden Abstand der Federwindungen aufweist.

Der äußere Anschlussbereich der neuen Spiralfeder kann beispielsweise einen Tangentialschenkel oder einen Außenhaken aufweisen. Der Anschlussbereich der Spiralfeder stützt sich in ihrer Verwendung typischerweise mit gewisser Vorspannung an einem Bauteil ab, auf das die Spiralfeder Drehmoment ausüben soll. Sie kann aber auch nur an ihrem inneren Anschlussbereich fest eingespannt werden und ansonsten ohne Vorspannung stehen.

Der Querschnitt des die neue Spiralfeder ausbildenden Federstahlmaterials kann rund, oval, quadratisch oder flach rechteckig sein. Es sind hier tatsächlich keine festen Grenzen gesetzt. Häufig wird aber ein irgendwie abgeflachtes Federstahlmaterial bevorzugt werden.

Die Oberfläche des die neue Spiralfeder ausbildenden Federstahlmaterials ist dadurch gekennzeichnet, dass sie nicht mit einem Gleitmittel beschichtet ist, weil diese für die Funktion der neuen Spiralfeder nicht benötigt wird. Es ist auch keine Oberflächenvergütung notwendig, um die Spiralfeder vor einem frühzeitigen Verschleiß durch aneinanderreibende Federwindungen zu schützen.

In einer bevorzugten konkreten Ausführungsform ist das Federstahlmaterial der neuen Spiralfeder zur Ausbildung der Federwindungen ohne anschließende Stückvergütung kalt verformt worden. Die Herstellung der neuen Spiralfeder erfolgt also vorzugsweise aus bereits federhartem Ausgangsmaterial und zwar im Windeverfahren.

Weiterhin bezieht sich die Erfindung vornehmlich auf Spiralfedern mit nicht mehr als 10 vollen Federwindungen, in der Regel sind es nicht mehr als 5 Federwindungen. Zudem ist das Federstahlmaterial selbst in der Ebene der Spiralfeder in der Regel mindestens 1 mm und vorzugsweise 2 bis 8 mm stark. Es geht also um vergleichsweise massive Spiralfedern.

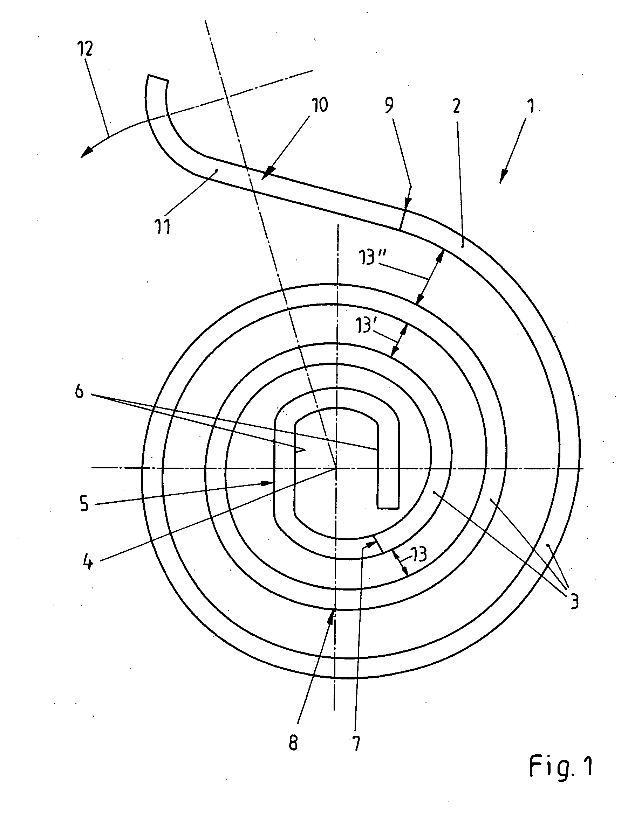

Die Erfindung wird im folgenden anhand von Ausführungsbeispielen weiter erläutert und beschrieben, dabei zeigen die
- Fig. 1 - 4: jeweils Seitenansichten von verschiedenen Ausführungsformen der neuen Spiralfeder.

Die in Fig. 1 dargestellte Spiralfeder 1 besteht aus einem Federstahlmaterial 2, das in der Zeichenebene spiralförmig in Federwindungen 3 um einen Anschlusspunkt 4 verläuft. Der Anschlusspunkt 4 ist kein Mittelpunkt der Spiralfeder 1 sondern markiert eine Achse senkrecht zur Zeichenebene, um die herum die Spiralfeder 1 zur Aufnahme von Drehmoment vorgesehen ist. Hierzu weist die Spiralfeder 1 um den Anschlusspunkt 4 herum einen Anschlussbereich 5 auf, der hier als sogenannte Zweiflächenaufnahme 6 gestaltet ist. An den Anschlussbereich 5 grenzt ab einem Punkt 7 ein Bereich 8 der Spiralfeder 1 an, welcher erst an einem Punkt 9 vor einem äußeren Anschlussbereich 10 endet. Der Bereich 8, der etwas mehr als zwei volle Federwindungen 3 umfasst, ist der Hauptbereich der Spiralfeder 1, in dem das Drehmoment zwischen dem Anschlussbereich 5 und dem Anschlussbereich 10, der zur Abstützung an einem zweiten Bauteil vorgesehen und hier als Tangentialschenkel 11 ausgebildet ist, aufgebracht wird. In dem Bereich 8 ist bei der Spiralfeder 1 ein kontinuierlich und gleichmäßig zunehmender Abstand 13 zwischen den Federwindungen 3 vorgesehen. D.h., je weiter man den Federwindungen 3 von dem Anschlussbereich 5 weg nach außen folgt, desto größer wird der Abstand 13. Bei zwei im Abstand einer vollen Federwindung gemessenen Abstände 13' und 13" zwischen den Federwindungen beträgt der Zuwachs des Abstand gut 50 %. Dieser Zuwachs des Abstands 13 bei der hier dargestellten unbelasteten Spiralfeder 1 schrumpft, wenn der äußere Anschlussbereich 10 in Richtung eines Pfeils 12 um den Anschlusspunkt 4 belastet wird. Damit trägt der Zuwachs des Abstands 13 dafür Sorge, dass die äußeren Federwindungen 3 der Spiralfeder 1 nicht vorzeitig, d.h. vor der Aufnahme des maximalen Drehmoments zwischen den Anschlussbereichen 5 und 10 einander berühren. Eine solche Berührung tritt vielmehr erst dann auf, wenn die Drehmomentaufnahmekapazität der Spiralfeder 1 vollständig erschöpft ist und sich über den gesamten Bereich 8 hinweg die Federwindungen 3 aneinander annähern.

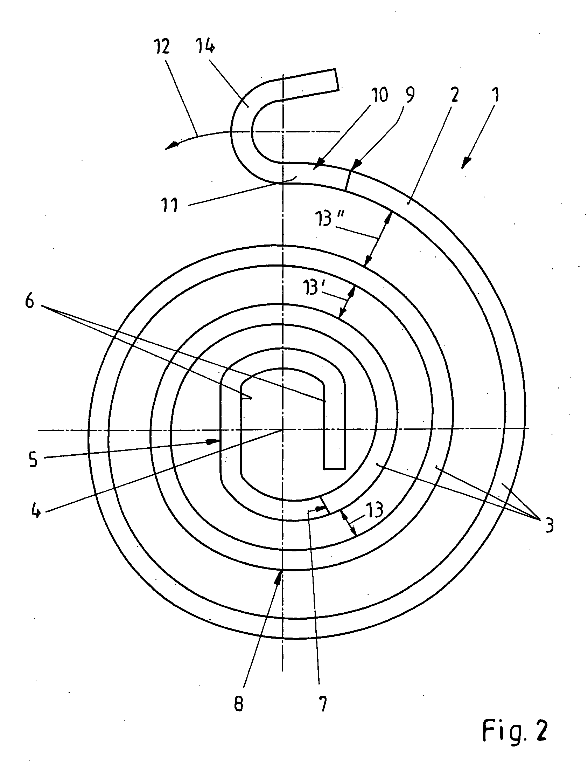

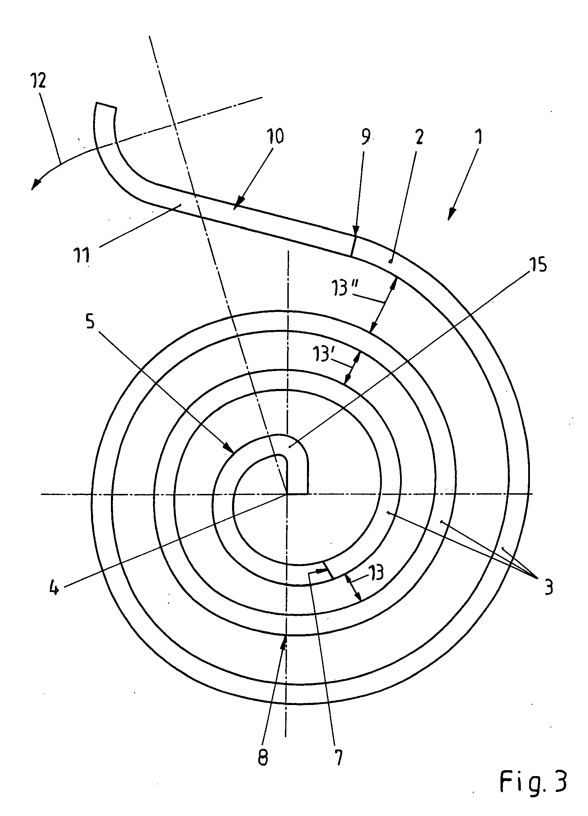

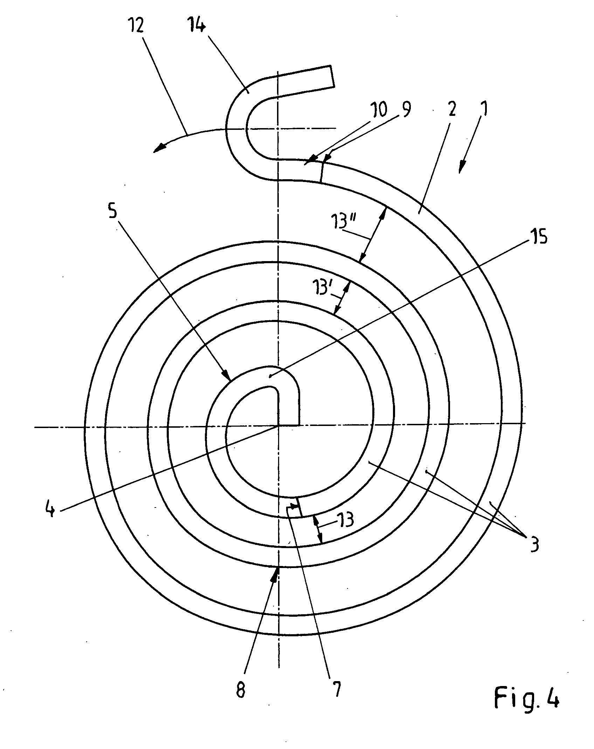

Fig. 2 zeigt eine gegenüber Fig. 1 abgewandelte Ausführungsform der Spiralfeder 1, bei der der Anschlussbereich 10 anstelle des Tangentialschenkels 11 als Außenhaken 14 ausgebildet ist. Die Variation der Ausführungsform der Spiralfeder 1 gemäß Fig. 3 gegenüber derjenigen gemäß Fig. 1 beschränkt sich auf die Ausbildung des inneren Anschlussbereichs 5 als Innenhakenaufnahme 15 anstelle der Zweiflächenaufnahme 6. Fig. 4 kombiniert die beiden Abweichungsmerkmale der Spiralfedern 1 der Fig. 2 und 3 von der Ausführungsform der Spiralfeder gemäß Fig. 1 zu einer weiteren Ausführungsform, bei der entsprechend ein Außenhaken 14 und eine Innenhakenaufnahme 15 vorgesehen sind.

Das Federstahlmaterial 2 der Spiralfeder 3 ist bei allen vier Ausführungsformen gemäß den Fig. 1 bis 4 nur kaltverformt, nicht nachträglich vergütet und nicht nachträglich oberflächenvergütet oder -beschichtet worden, ohne das dies Nachteile bezüglich der Lebensdauer der Spiralfeder 1 hätte. Die Spiralfeder 1 ist damit sehr wirtschaftlich herstellbar. Auch ihre gute Material- und Bauraumausnutzung sind wirtschaftlich von Vorteil.

### BEZUGSZEICHENLISTE

- 1 -: Spiralfeder
- 2 -: Federstahlmaterial
- 3 -: Federwindung
- 4 -: Anschlusspunkt
- 5 -: innerer Anschlussbereich
- 6 -: Zweiflächenaufnahme
- 7 -: Punkt
- 8 -: Bereich
- 9 -: Punkt
- 10 -: äußerer Anschlussbereich

- 11 -: Tangentialschenkel
- 12 -: Pfeil
- 13 -: Abstand
- 14 -: Außenhaken
- 15 -: Innenhakenaufnahme

## Patentansprüche

1. Spiralfeder mit mehreren in einer Ebene ineinander angeordneten Federwindungen, **dadurch gekennzeichnet, dass** der Abstand (13) zwischen den Federwindungen (3) über einen Bereich (8) der unbelasteten Spiralfeder (1) von innen nach außen zunimmt.

2. Spiralfeder nach Anspruch 1, **dadurch gekennzeichnet, dass** der Abstand (13) zwischen den Federwindungen (3) in dem Bereich (8) der unbelasteten Spiralfeder (1) stetig zunimmt.

3. Spiralfeder nach Anspruch 2, **dadurch gekennzeichnet, dass** der Abstand (13) zwischen den Federwindungen (3) in dem Bereich (8) der unbelasteten Spiralfeder (1) mit gleichbleibende Zuwachsrate zunimmt.

4. Spiralfeder nach einem der Ansprüche 1 bis 3, **dadurch gekennzeichnet, dass** sich bei Belastung der Spiralfeder (1) die Federwindungen (3) in dem gesamten Bereich (8), in dem der Abstand (13) zwischen den Federwindungen (3) der unbelasteten Spiralfeder (1) zunimmt, gleichzeitig auf Berührung aneinander annähern.

5. Spiralfeder nach einem der Ansprüche 1 bis 4, **dadurch gekennzeichnet, dass** sich der Bereich (8) der unbelasteten Spiralfeder (1), in dem der Abstand (13) zwischen den Federwindungen (3) zunimmt, an einem äußeren Anschlussbereich (10) der Spiralfeder (1) endet.

6. Spiralfeder nach einem der Ansprüche 1 bis 5, **dadurch gekennzeichnet, dass** der Bereich (8) der unbelasteten Spiralfeder (1), in dem der Abstand (13) zwischen den Federwindungen (3) zunimmt, an einem inneren Anschlussbereich (5) der Spiralfeder (1) beginnt.

7. Spiralfeder nach Anspruch 5, **dadurch gekennzeichnet, dass** der äußere Anschlussbereich (10) einen Tangentialschenkel (11) oder einen Außenhaken (14) aufweist.

8. Spiralfeder nach Anspruch 6, **dadurch gekennzeichnet, dass** der innere Anschlussbereich (5) eine Zweiflächenaufnahme (6) oder eine Innenhakenaufnahme (15) aufweist.

9. Spiralfeder nach einem der Ansprüche 1 bis 8, **dadurch gekennzeichnet, dass** der Querschnitt von die Spiralfeder (1) ausbildendem Federstahlmaterial (2) rund, oval, quadratisch oder flach rechteckig ist.

10. Spiralfeder nach einem der Ansprüche 1 bis 9, **dadurch gekennzeichnet, dass** das Federstahlmaterial (2) zur Ausbildung der Federwindungen (3) ohne anschließende Stückvergütung kalt verformt ist.
